# NEUE EUROPÄISCHE PATENTSCHRIFT

(11) **EP 0 857 152 B2**
(45) Veröffentlichungstag und Bekanntmachung des Hinweises auf die Entscheidung über den Einspruch: **17.03.2004**
(45) Hinweis auf die Patenterteilung: 16.06.1999
(21) Anmeldenummer: 96938031.0
(22) Anmeldetag: 24.10.1996
(51) Int. Cl.: B65G 1/04, B65G 17/26

(54) **VERFAHREN UND VORRICHTUNG ZUM AUSZIEHEN VON ROLLPALETTEN IN DER KOMPAKT-LAGERTECHNIK, SOWIE ROLLPALETTE HIERFÜR**
METHOD AND DEVICE FOR EXTRACTING ROLLING PALLETS IN COMPACT STORAGE TECHNOLOGY, AND ROLLING PALLET THEREFOR
PROCEDE ET DISPOSITIF POUR EXTRAIRE DES PALETTES A ROULETTES UTILISEES DANS LA TECHNIQUE DE STOCKAGE COMPACT ET PALETTE A ROULETTES APPROPRIEE

(30) Priorität: 27.10.1995 CH 303295
(43) Veröffentlichungstag der Anmeldung: 12.08.1998
(73) Patentinhaber: Westfalia WST Systemtechnik GmbH & Co. KG, 33829 Borgholzhausen (DE)
(72) Erfinder: ARTACHO, Franz, CH-5032 Rohr (CH)
(74) Vertreter: Philipp, Matthias, Dr.
(86) Internationale Anmeldenummer: PCT/EP1996/004612
(87) Internationale Veröffentlichungsnummer: WO 1997/015513

(56) Entgegenhaltungen:
- EP-A- 0 335 738
- EP-B- 0 126 431
- EP-B- 0 500 065
- DE-A- 3 624 033
- DE-A- 3 805 712
- DE-A- 4 233 690
- FR-A- 1 443 101
- US-A- 4 690 611

## Beschreibung

Die Erfindung betrifft ein Verfahren zum Ausziehen und Koppeln von Rollpaletten, die Koppelvorrichtung und Anschlagleisten aufweisen, in der Kompakl-Lagertechnik mittels einer Auszugsvorrichtung sowie mittels Rollpaletten, die Koppelvorrichtungen aufweisen welche in der Lagertechnik in Kompaktlagersystemen eingesetzt werden. Sie werden als Trag- oder Transportunterlage für Europapaletten, Gitterboxen, Papierrollen, Personenwagen und andere Stückgüter verwendet.

In solchen Kompaktlagern (EP 462 125 81) werden die Rollpaletten über Verschiebewagen auf mehreren Fahrbahnebenen horizontal in X-Richtung transportiert, und in die verschiedenen Lagerkanäle eingelagert. Über die Hochleistungs-Aufzüge werden die Rollpaletten vertikal in Y-Richtung auf die verschiedenen Lagerebenen verteilt. Die Beschickung der Lagerebenen kann auch bei kleinen Leistungen über ein Regalbediengerät erfolgen. Da die Rollpaletten in den Lagerkanälen oder bei den Übergabeplätzen von Horizontal- zum Vertikaltransport und umgekehrt zwischen den Verschiebewagen und den Aufzügen von keiner aktiven ortsfesten Horizontal-Förderanlage in Z-Richtung befördert werden, müssen die Rollpaletten mit Auszugsvorrichtungen, die auf den Verschiebewagen und den Aufzügen angebracht sind, bewegt werden. Die Auszugsvorrichtungen greifen bei der Rollpalettenaufnahme wahlweise in dem linken oder dem rechten Lagerkanal oder auf dem Übergabepatz die vordersten Rollpaletten. Diese werden auf die Aufzüge bzw. die Verschiebewagen gezogen.

Bei der Rollpalettenabgabe werden die Rollpaletten wahlweise in die linken oder die rechten Lagerkanäle oder an die Übergabeplätze von den Verschiebewagen oder den Aufzügen entsprechend abgegeben. Damit die hinteren Rollpaletten in den Lagerkanälen nach hinten und beim Auslagern nach vorne gezogen werden, müssen die Rollpaletten über Koppelvorrichtungen miteinander zu Palettenzügen gekoppelt werden. Mit den Auszugsvorrichtungen, welche die vordersten Rollpaletten greifen, werden die ganzen Züge von Rollpaletten in den Lagerkanälen hin und her bewegt. Der gleiche Vorgang erfolgt auch über die Auszugsvorrichtung in den Aufzügen.

Die heutigen Koppelvorrichtungen können nicht aus allen Fahrtrichtungen des Verschiebewagens und des Aufzuges direkt gekoppelt werden, was komplizierte Koppelvorgänge bedingt. Es müssen oft Umwege über den Hub oder eine Retourbewegung gefahren werden. Dadurch entstehen hohe Zeitverluste, welche die Ein- und Auslagerleistung des gesamten Lagers reduzieren.

Aus der DE 38 05 712 A1 ist eine Vorrichtung zum Positionieren einzelner zusammenkuppelbarer Rollwagen in Kanälen eines Rollwagenlagers und auf einem Trolleyfahrzeug bekannt, das in Querrichtung zu den Kanälen in einem Gang verfahrbar ist, um sowohl Rollwagen in das Lager hineinzubringen als auch aus diesem herauszunehmen. Die bekannte Vorrichtung ermöglicht ein Koppeln in der horizontalen Ebene.

Ausgehend von diesem Stand der Technik liegt der vorliegenden Erfindung in erster Linie die Aufgabe zugrunde, ein Verfahren zum Ausziehen und Koppeln der Rollpaletten einfacher, sicherer und schneller im Einsatz zu gestalten, sowie die entsprechende Auszugsvorrichtung und Rollpalette zur Durchführung dieses Verfahrens einfacher und kostengünstiger in der Herstellung zu gestalten.

Außerdem sollen Auszugsvorrichtung und Rollpalette in ihrer Ausbildung dem schnellen Lagerumsatz angepaßt werden.

Diese Aufgabe wird bei dem erfindungsgemäßen Gegenstand durch ein Verfahren mit den kennzeichnenden Merkmalen des Anspruchs 1 sowie eine Auszugsvorrichtung nach Anspruch 2 und eine Rollpalette nach Anspruch 5 gelöst. Vorteilhafte Ausgestaltungen und Weiterbildungen ergeben sich aus den jeweils nachfolgenden Ansprüchen.

Ein besonderer Vorteil der erfindungsgemäßen Ausführung besteht darin, daß die Auszugsvorrichtung des Aufzuges oder des Verschiebewagens die Rollpaletten spielfrei und mit einer definierten Klemmkraft über einen oder mehrere angetriebene Nockengreifer aus der Lagerposition herausziehen. Die Nockengreifer sind dazu auf Ketten angeordnet, die den Antrieb der Nockengreifer darstellen. wobei zu einem Greifersatz zwei Ketten gehören, auf denen jeweils ein oder mehrere Nockengreifer angeordnet sind. Der bzw. die Nokkengreifer der ersten Kette ziehen die Rollpalette an einer auf der Rollpalette angeordneten Anschlagleiste aus der Lagerposition, während der oder die Nockengreifer der zweiten Kette auf der anderen Seite der Anschlagleiste dagegen halten. Zur Erzeugung der definierten Klemmkraft ist jedem Greifersatz mit zugeordneten Kettentrieb eine Steuerung bzw. Drehmomentregelung für den Antrieb der beiden Ketten zugeordnet. Die Ketten sind vorteilhaft als endlos umlaufende Rollenketten ausgebildet, die im Auszugsund Klemmbereich der Rollpalette über eine Linearführung geführt ist. Durch die Anordnung der Linearführung wird das aus Auszugskraft und Klemmkraft der Ketten entstehende Kippmoment aufgenommen, wodurch die Kette nur durch reine Zugkraft belastet ist.

Ein weiterer Vorteil liegt in der erfindungsgemäßen Ausbildung der Rollpalette mit einer Anordnung von zwei oder mehr Rollenpaaren pro Achse. Durch die Anordnung von zwei oder mehreren Rollenpaaren pro Achse wird das stoßfreie Überfahren von Schienenunterbrechungen in einem Lagersystem mit in den Lagerkanälen oder Verschiebwegen angeordneten Schienenführungen ermöglicht. Auch die Übergabe der

Rollpaletten aus der Lagerposition auf einen Aufzug oder Verschiebewagen und umgekehrt erfolgt stoßfrei, da immer ein Rollenpaar auf dem beweglichen Schienenteil am Aufzug oder Verschiebewagen aufliegt, während das zweite Rollenpaar in der ortsfesten Schiene des Lagerkanals oder Übergabeplatzes geführt wird.

Die erfindungsgemäße Koppelvorrichtung an den Rollpaletten besteht aus mehreren ineinander geschobenen Platten, die gekoppelt mit einer weiteren Rollpalette in der X-Achse eine formschlüssige Verbindung bilden. Auf den Verschiebewagen erfolgt das Koppeln durch die Bewegungskombination in der Z- und X-Achse. Auf den Aufzügen erfogt das Koppeln durch die Bewegungskombination in der Z- und y-Achse. Ein besonderer Vorteil der erfindungsgemäßen Ausbildung der Koppelvorrichtung liegt darin, daß die aus einzelnen verschraubten und nach Bedarf gehärteten Platten bestehende Koppelvorrichtung in X- und Y-Richtung direkt durchfahren werden können, ohne Umwege von unten oder oben, bzw. von hinten oder vorne. Dadurch werden zeitaufwendige Positionierfahrten von Aufzug oder Verschiebewagen überflüssig. Durch den Aufbau der Koppelvorrichtung aus verschiedenen Platten können einzelne Platten bei Verschleiß leicht ausgetauscht werden. In einer weiteren vorteilhaften Anordnung der Kopplungsvorrichtung ist die Kopplungsvorrichtung auf der Mittellinie der Rollpalette in Z-Richtung angeordnet. Je nach Anforderung an das Kompaktlager und je nach Art des zu transportierenden Lagergutes kann eine andere Ausgestaltung und Anordnung der Koppelvorrichtung vorteilhaft sein.

Eine weitere Ausführung der Erfindung sieht deshalb eine zweiteilige Ausbildung der Koppelvorrichtung vor, bei der zwei Koppelelemente symmetrisch im Abstand zur Mittellinie in Z-Richtung angeordnet sind. Dadurch wird ein Verkanten der Rollpaletten in den Schienenführungen vermieden, wodurch ein symmetrisches Ziehen durch die Auszugsvorrichtung gewährleistet ist. Durch symmetrisches Ziehen liegt in den Rollenketten der jeweiligen Greifersätze immer die gleiche Zugbelastung, was eine gleichmäßige, berechenbare Erzeugung der Klemmkraft über die Steuerung bzw. Drehmomentenregelung bewirkt.

Ein Ausführungsbeispiel der Erfindung ist in der Zeichnung dargestellt und wird im folgenden näher beschrieben.

Es zeigen:
- Figur 1: eine Übersicht eines Kompaktlagers mit der Anwendung der Auszugsvorrichtung (11) und der Koppelvorrichtung (12),
- Figur 2: zwei Rollpaletten (3) mit der Koppelvorrichtung (12) auf der Mittellinie,

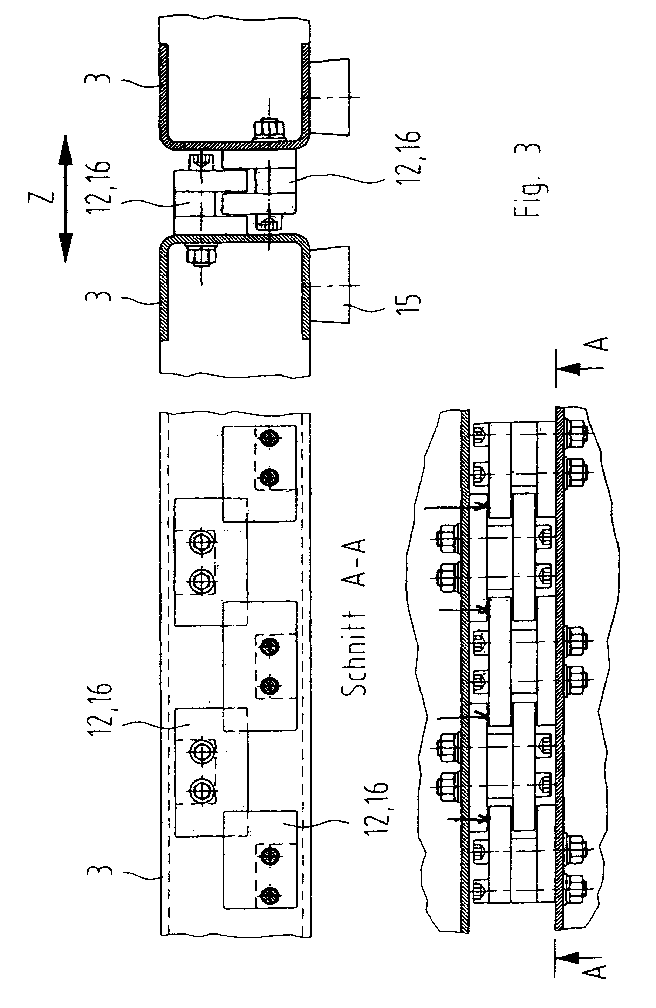

- Figur 3: eine Koppelvorrichtung (12) nach Figur 2 im Detail
- Figur 4: eine schematische Darstellung eines Auszuges mit gleichzeitigem Lagerkanalwechsel der Rollpalette (3) von links nach rechts,
- Figur 5: eine Auszugsvorrichtung (11) im Detail,
- Figur 6: zwei Rollpaletten (3) mit zweiteiliger Koppelvorrichtung (12) symmetrisch im Abstand zur Mittellinie,
- Figur 7: eine Koppelvorrichtung (12) nach Figur 6 im Detail

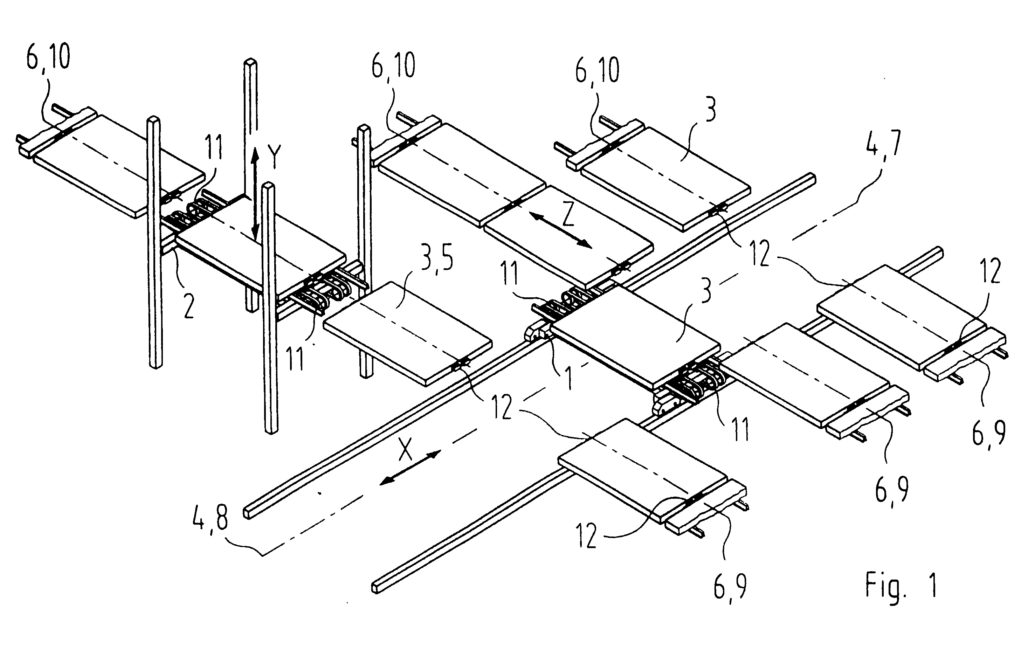

Figur 1 zeigt eine Vorrichtung mit Auszugs- und Koppelelmechanismus für Rollpaletten (3) in Kompaktlagersystemen. Die Rollpalette (3) kommt als Trag- oder Transportunterlage zum Einsatz. Die Rollpaletten (3) werden über Verschiebewagen (1) auf mehreren Fahrbahnebenen (4) horizontal in X-Richtung transportiert, und in die verschiedenen Lagerkanäle (6) eingelagert. Über Hochleistungs-Aufzüge (2) werden die Rollpaletten (3) vertikal in Y-Richtung auf die verschiedenen Lagerebenen verteilt. Der horizontale Transport der Rollpalettten (3) in Z-Richtung erfolgt über Auszugsvorrichtungen (11), die auf den Verschiebewagen (1) und den Aufzügen (2) angebracht sind. Die Auszugsvorrichtungen (11) greifen bei der Rollpalettenaufnahme wahlweise in dem linken (10) oder dem rechten (9) Lagerkanal (6) oder auf dem Übergabeplatz (5) die vordersten Rollpaletten (3). Diese werden auf die Aufzüge (2) bzw. die Verschiebewagen (1) gezogen.

Bei der Rollpalettenabgabe werden die Rollpaletten (3) wahlweise in die linken (10) oder die rechten (9) Lagerkanäle (6) oder an die Übergabeplätze (5) von den Verschiebewagen (1) oder den Aufzügen (2) entsprechend abgegeben. Die Rollpaletten (3) sind in den Lagerkanälen (6) über Koppelvorrichtungen (12) miteinander zu Palettenzügen gekoppelt.

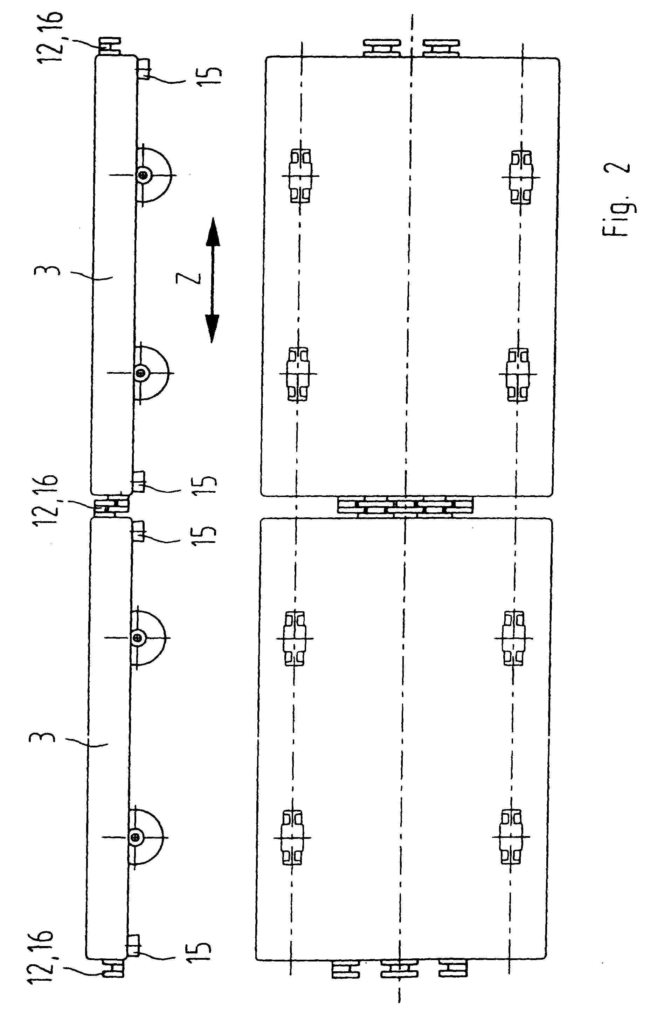

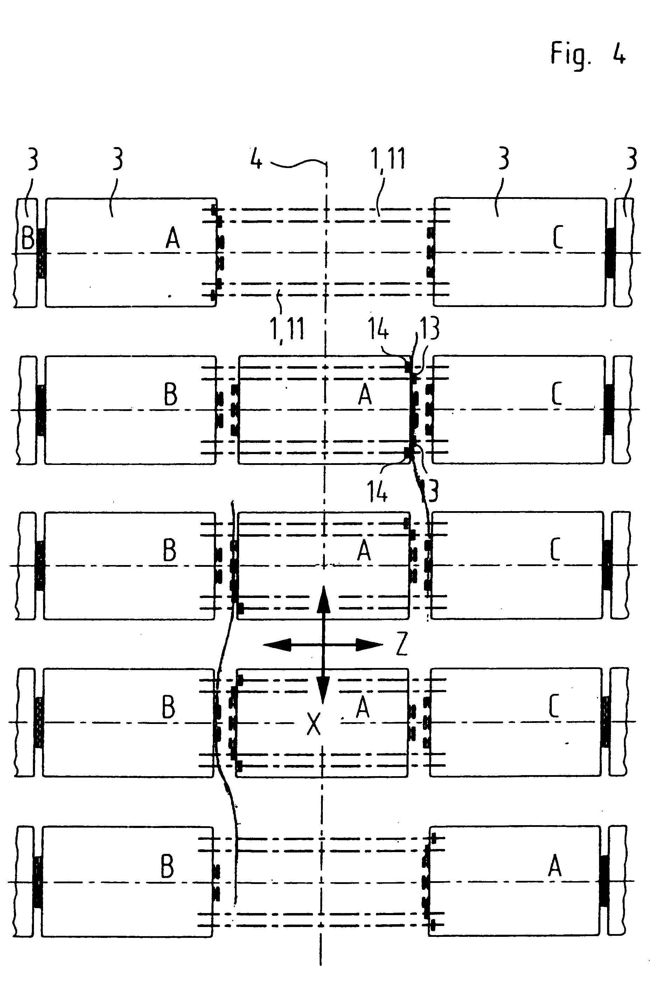

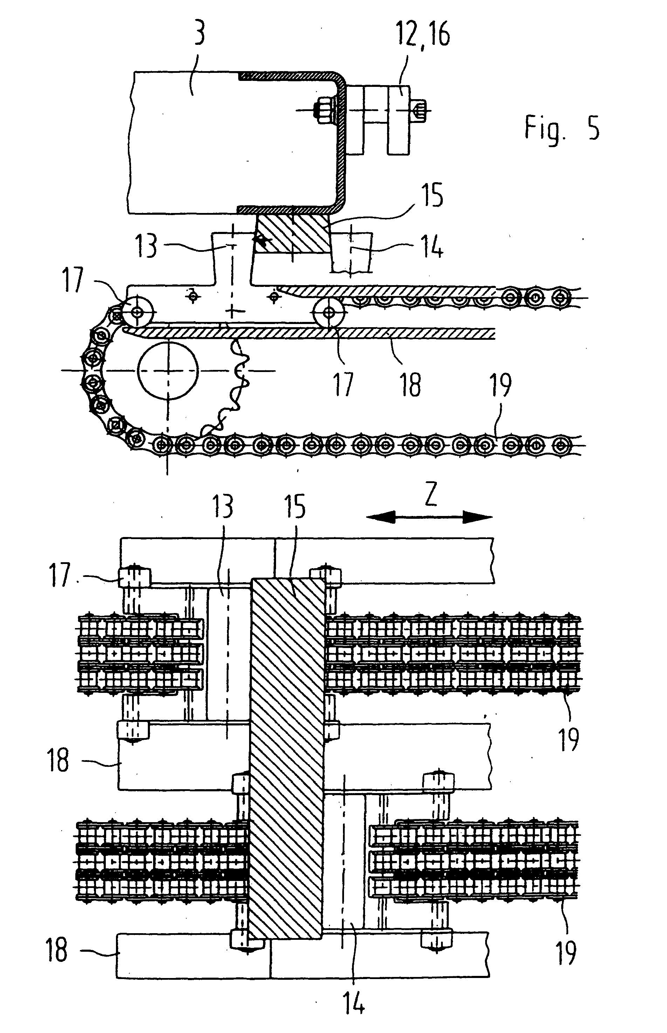

Mit den Auszugsvorrichtungen (11), welche die vordersten Rollpaletten (3) greifen, werden die ganzen Züge von Rollpaletten (3) in den Lagerkanälen (6) hin und her bewegt. Der gleiche Vorgang erfolgt auch über die Auszugsvorrichtung (11) in den Aufzügen (2). Die Koppelvorrichtung (12) nach Figur 2 besteht aus mehreren ineinander geschobenen Platten (16), die in der X-Achse eine formschlüssige Verbindung bilden. Auf den Verschiebewagen (1) erfolgt das Koppeln durch die Bewegungskombination in der Z- und X-Achse, die in Figur 4 durch die Bewegungslinie dargestellt ist. Auf den Aufzügen erfolgt das Koppeln in gleicher Weise durch die Bewegungskombination in der Z- und Y-Achse. Die aus einzelnen verschraubten, und nach Bedarf gehärteten, Platten (16) bestehenden Koppelvorrichtungen (12) können in X- und Y-Richtung direkt von hinten oder vorne und von unten oder oben ohne Umwege durchfahren werden. Die Auszugsvorrichtung (11) besteht nach Figur 4 und 5 aus vier einzeln verfahrbaren Nockengreifern (13, 14), welche über vier endlos umlaufende Rollenketten (19), über Servomotoren einzeln angetrieben werden. Die zwei äusseren Greifer (13) und die zwei inneren Greifer (14) arbeiten jeweils im Auszugsbetrieb gegenseitig und paarweise. Ein innerer (14) und ein äusserer (13) Greifer bilden zusammen einen Greifersatz. An den Stirnseiten der Rollpaletten (3) sind unten Anschlagleisten (15) angebracht, wo sich die Nockengreifer (13, 14) festklemmen können. Die zwei äusseren Nockengreifer (13) untergreifen die Rollpaletten (3) an den Anschlagleisten (15), die zwei inneren Nockengreifer (14) greifen die Nockengreifer von der anderen Seite der Anschlagleisten (15). Durch die Servo-Drehmomentregelung der Nockengreifer (13, 14) bzw. des entsprechenden Kettentriebs werden die Rollpaletten (3) mit einer definierten Klemmkraft gehalten. Die Nockengreifer (13, 14) verschieben dann die Rollpaletten (3) in Z-Richtung über die Kettenbewegung mittels Servo-Kettenantrieb. Da die Nockengreifer (13, 14) auf den Verschiebewagen (1) und den Aufzügen (2) sowie die Anschlagleisten (15) auf den Rollpaletten konisch ausgebildet sind, entsteht nach der Klemmung nach oben eine formschlüssige Verbindung, so daß auch leere Rollpaletten (3) nicht aus der Auszugsvorrichtung springen können. Über Absolut-Wegmessung können die Auszüge optimal gesteuert werden. Beim Umsetzen der Rollpaletten (3) von den linken in die rechten Lagerkanäle (6) können die Nockengreifer (13, 14) einzeln für das Durchfördern verstellt werden, so daß die Rollpaletten (3) immer mindestens durch zwei Nockengreifer (13, 14) gehalten werden. Damit die Rollenketten beim Auszugsvorgang keine Kippmomente erhalten. sind die Greifernocken (13, 14) über Führungsrollen (17) einer Linearführung in Schienenführungen (18) linear geführt. Die Verschiebelänge der Auszugsvorrichtung (11) ist so lang gebaut, daß die vordersten Rollpaletten (3) links und rechts in den Lagerkanälen (6) unterfahren werden können und somit ohne Querverschiebung des Verschiebewagen-Untertisches (1) in Z-Richtung auskommen. Die Auszugsvorrichtungen (11) auf den Aufzügen (2) müssen in der Vertikalfahrt die Rollpaletten (3) seitlich in den Lagerkanälen (6) oder den Übergabeplätzen (5) kreuzen können. Sie dürfen die seitlichen Rollpaletten (3) nicht unterfahren. Für diese Auszugsvorrichtungen (11) ist ein zusätzlicher, in Z-Richtung verschiebbarer, Untertisch erforderlich.

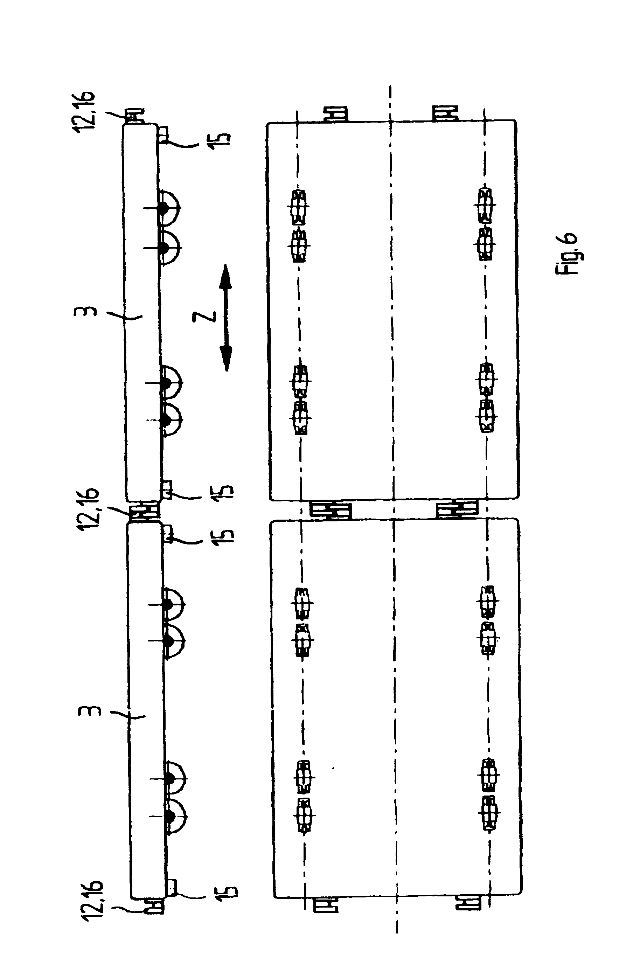

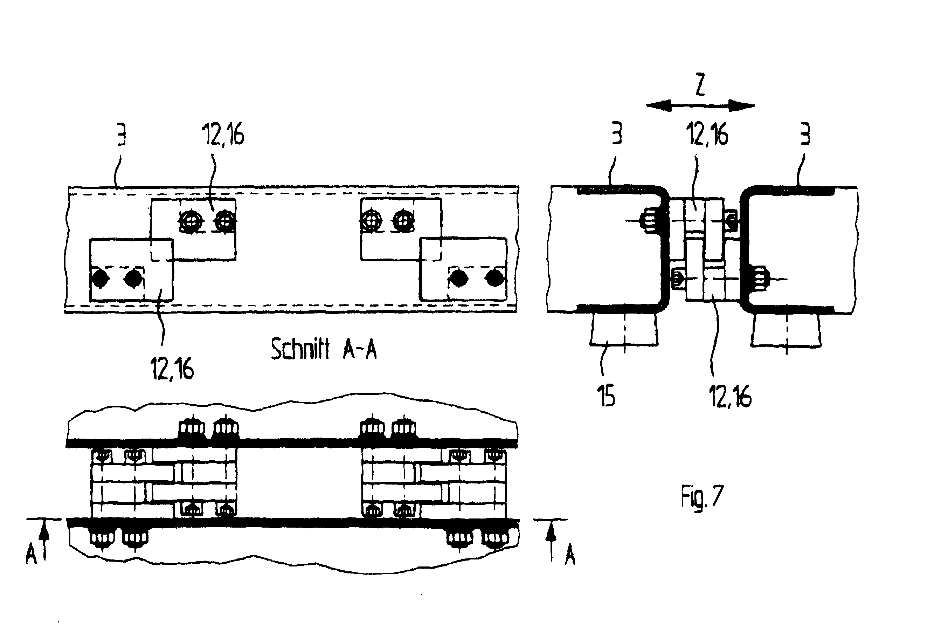

Figur 6 und 7 zeigen die Koppelvorrichtung (12) mit symmetrisch im Abstand zur Mittellinie angeordneten Koppelelementen, die ein symmetrisches Ziehen der Rollpaletten (3) ermöglichen. Um ein stoßfreies Überfahren von Schienenunterbrechern zu ermöglichen, ist außerdem die Anordnung von zwei oder mehreren Rollenpaaren pro Achse (s. Figur 6 u. 7) vorgesehen.

## Patentansprüche

1. Verfahren zum Ausziehen und Koppeln von Rollpaletten (3) in der Kompakt-Lagertechnik mittels einer Auszugsvorrichtung (11) für einen Verschiebewagen (1) bzw. Aufzug (2) sowie mittels Rollpaletten (3), die Koppelvorrichtungen aufweisen, mit einer Auszugsvorrichtung, die einzeln antreibbare, umlaufende Rollenketten (19) mit daran befestigten Nockengreifern (13, 14) aufweist, wobei diese Nockengreifer mit an zwei Seiten der Rollpalette (3) angeordneten Anschlagleisten (15) in eine spielfrei gehaltene Klemmposition gebracht werden können, um die Rollpalette auf einen Verschiebewagen bzw. Aufzug zu ziehen, der die Rollpalette weiterbefördert,
**dadurch gekennzeichnet,**
**daß** die Bewegungsrichtungen beim Ausziehen und Koppeln der Rollpaletten (3) in einem 3-dimensionalen Koordinatensystem mit X-, Y- und Z-Achse festgelegt sind, die wobei auf den Verschiebewagen (1) das Koppeln durch die Bewegungskombination in der Z-und X-Achse und auf den Aufzügen (2) durch die Bewegungskombination in der Z- und Y-Achse erfolgt, und wobei die Auszugsvorrichtung (11) die Rollpalette (3) an den Anschlagleisten (15) über einen oder mehrere angetriebene Nockengreifer (13, 14) in Z-Richtung herauszieht, während ein oder mehrere angetriebene Nockengreifer (13, 14) auf der in Z-Richtung gegenüberliegenden Seite der Anschlagleisten (15) dagegen halten und so die Rollpalette (3) in X-Richtung mit einer über eine Steuerung und Drehmomentregelung erzeugte definierte Klemmkraft absolut spielfrei halten,
**daß** die Auszugsvorrichtung aus vier endlos umlaufenden Rollenketten (19), auf denen jeweils ein Nockengreifer (13, 14) angeordnet ist, besteht, die einzeln angetrieben werden,
**daß** jeweils zwei Rollenketten(19) einen Greifersatz mit gegensinnig bewegbaren Nokkengreifern (13, 14) bilden,
und **daß** während der Position der Rollpalette (3) auf dem Verschiebewagen (1) bzw. Aufzug (2) jeweils nur ein Greifersatz derart gesteuert wird, daß der einzelne Greifersatz bei einem bevorstehenden Wechsel der Rollpalette auf die entgegengesetzte Seite der Lagerposition an der gegenüberliegenden Anschlagleiste (15) der Rollpalette (3) spielfrei klemmend in Eingriff gebracht wird, wobei der andere Greifersatz während dieses Umgreifvorganges seinen spielfreien Klemmgriff an der anderen Anschlagleiste (15) beibehält.

2. Auszugsvorrichtung zur Durchführung eines Verfahrens zum Ausziehen und Koppeln von Rollpaletten (3), die Koppelvorrichtungen (12) und Anschlagleisten (15) aufweisen, nach Anspruch 1, wobei die Auszugsvorrichtung einzeln antreibbare, umlaufende Rollenketten (19) mit daran befestigten Nockengreifern (13, 14) aufweist und wobei diese Nockengreifer an einer an der Rollpalette (3) angeordneten Anschlagleiste (15) in eine spielfrei gehaltene Klemmposition gebracht werden können, um die Rollpalette auf einen Verschiebewagen (1) bzw. Aufzug (2) zu ziehen, der die Rollpalette weiterbefördert,
**dadurch gekennzeichnet,**
**daß** die Auszugsvorrichtung (11) vier endlos umlaufende und mittels Servomotoren separat antreibbare Rollenketten (19) aufweist, wobei auf jeder Rollenkette jeweils ein Nokkengreifer (13, 14) angeordnet ist,
**daß** die Nockengreifer mit der Anschlagleiste eine formschlüssige Verbindung bilden können,
**daß** jeweils zwei nebeneinanderliegende Rollenketten (19) mit ihren gegensinnig bewegbaren Nockengreifern (13, 14) einen Greifersatz bilden,
**daß** die Greifersätze gemeinsam und/oder unabhängig voneinander steuerbar ausgebildet sind, derart, daß beim Auszugsvorgang der Rollpalette (3) auf den Verschiebewagen (1) bzw. Aufzug (2) beide Greifersätze gemeinsam an einer Anschlagleiste (15) der Rollpalette spielfrei klemmend angreifen und daß beim Umgreifvorgang vor einem Wechsel der Rollpalette auf die andere Seite der Lagerposition ein einzelner Greifersatz zur gegenüberliegenden Anschlagleiste (15) bewegbar und mit dieser in einen spielfreien Klemmgriff bringbar ist, wobei ein Nockengreifer die Rollpalette in Z-Richtung zieht und ein zweiter Nockengreifer auf der in Z-Richtung gegenüberliegenden Seite der Anschlagleiste dagegen hält.

3. Auszugsvorrichtung nach Anspruch 2
**dadurch gekennzeichnet,**
**daß** die Auszugsvorrichtung (11) mit den Anschlagleisten (15) an der Rollpalette (3) sowie den Nockengreifern (13, 14) am Verschiebewagen (1) oder Aufzug (2) durch die konstruktive Formgebung nach oben zwischen Nockengreifer (13, 14) und Anschlagleiste (15) durch eine konische Ausbildung der Anschlagleisten (15) und der Nockengreifer (13, 14) eine formschlüssige Verbindung bilden können

4. Auszugsvorrichtung nach Anspruch 2 oder 3,
**dadurch gekennzeichnet,**
**daß** die Auszugsvorrichtung (11) über Rollenketten endlos umlaufend angetrieben, im Auszugs- und Klemmbereich der Rollpalette (3) derart geführt ist, daß das Kippmoment, entstehend aus Auszugskraft und Klemmkraft der Nockengreifer (13, 14) über die Linearführungen (17, 18) aufgenommen wird.

5. Rollpalette mit Koppelvorrichtungen (12) und Anschlagleisten (15) zur Durchführung eines Verfahrens nach Anspruch 1 mittels einer Vorrichtung nach Anspruch 2, **dadurch gekennzeichnet, daß** die Rollpalette (3) auf ihrer Unterseite mit Anschlagleisten (15) ausgebildet ist, welche mit zwei oder mehreren der angetriebenen Nockengreifer (13, 14) der Auszugsvorrichtung (11) eine formschlüssige Verbindung bilden können und daß die Koppelvorrichtung (12) an der Rollpalette (3) aus mehreren in Z-Richtung verschraubten und getrennten Einzelpaletten (16) aus verschiedenen Materialien verschiedener Härte hergestellt ist.

6. Rollpalette nach Anspruch 5,
**dadurch gekennzeichnet,**
**daß** die Platten (16) der Koppelvorrichtung (12) derart in Z-Richtung angeordnet sind,
**daß** die Koppelvorrichtungen (12) in vertikaler Fahrt auf dem im Kompaktlager in Y-Richtung verfahrbar angeordneten Aufzug (2) von unten und von oben direkt eingekoppelt durchfahren werden kann und in horizontaler Fahrt innerhalb der horizontal ausgerichteten Fahrbahn ebenen (4) des Kompaktlagers in X-Richtung auf dem Verschiebewagen (1) von beiden Seiten in X-Richtung direkt eingekoppelt durchfahren werden kann.

7. Rollpalette nach Anspruch 6,
**dadurch gekennzeichnet,**
**daß** die Koppelvorrichtung (12) auf der Mittellinie der Rollpalette (3) in Z-Richtung angeordnet ist

8. Rollpalette nach Anspruch 6,
**dadurch gekennzeichnet,**
**daß** die Koppelvorrichtung (12) aus zwei Koppelelementen besteht, die symmetrisch in gleichem Abstand zur Mittellinie der Rollpalette (3) in Z-Richtung angeordnet sind.

9. Rollpalette nach einem oder mehreren der Ansprüche 6 bis 8,
**dadurch gekennzeichnet,**
**daß** pro Radachse zwei oder mehrere Rollenpaare angeordnet sind.

## Claims

1. Method for extracting and coupling rolling pallets (3) in compact storage technology by means of an extractor (11) for a trolley (1) or respectively elevating means (2) and by means of rolling pallets (3), which include coupling devices, having an extractor, which includes individually driveable, circulating roller chains (19) with cam-type gripping means (13, 14) secured thereon, it being possible to bring these cam-type gripping means into a clamping position retained without play with stop bars (15) disposed on two sides of the rolling pallet (3), in order to pull the rolling pallet onto a trolley or respectively elevating means, which continues to convey the rolling pallet, **characterised in that** the directions of movement when extracting and coupling the rolling pallets (3) are established in a 3-dimensional system of co-ordinates with X, Y and Z axes, wherein the coupling onto the trolley (1) is effected by means of the movement combination in the Z and X axes and onto the elevating means (2) by means of the movement combination in the Z and Y axis, and wherein the extractor (11 ) pulls the rolling pallet (3) out in the Z direction at the stop bars (15) via one or more driven cam-type gripping means (13, 14), whilst one or more driven cam-type gripping means (13, 14) hold in opposition thereto on the side of the stop bars (15) situated opposite in the Z direction and in this way hold the rolling pallet (3) in the X direction in a totally play-free manner at a specific clamping force, which is generated via a control and torque regulating means, **in that** the extractor comprises four endlessly circulating roller chains (19), on each of which a cam-type gripping means (13, 14) is disposed, said roller chains being individually driven, **in that** two roller chains (19) respectively form a set of gripping means having cam-type gripping means (13, 14) which are movable in a contra-rotating manner, and **in that** during the position of the rolling pallet (3) on the trolley (1) or respectively elevating means (2) only one respective set of gripping means is controlled in such a manner that the individual set of gripping means, where a change of rolling pallet is imminent, is brought into engagement with the opposite side of the storage position on the oppositely situated stop bar (15) of the rolling pallet (3), the other set of gripping means retaining its play-free clamping engagement on the other stop bar (15) during this re-engaging operation.

2. Extractor for accomplishing a method for the extracting and coupling of rolling pallets (3), which include coupling devices (12) and stop bars (15), according to claim 1, wherein the extractor has individually drivable, circulating roller chains (19) with cam-type gripping means (13, 14) secured thereon, and wherein these cam-type gripping means can be brought into a play-free clamping position at a stop bar (15) disposed on the rolling pallet (3) in order to pull the rolling pallet onto a trolley (1) or respectively elevating device (2), which continues to convey the rolling pallet, **characterised in that** the extractor (11) has four endlessly circulating roller chains (19), which are drivable separately by means of servomotors, one cam-type gripping means (13, 14) being disposed on each roller chain, **in that** the cam-type gripping means can form a form-locking connection with the stop bar, **in that** two respective adjacent roller chains (19) form a set of gripping means with their cam-type gripping means (14, 14), which are moveable in a contra-rotating manner, **in that** the sets of gripping means are controllable jointly and/or independently of one another, in such a manner that, when the rolling pallet (3) is being pulled onto the trolley (1) or respectively elevating means (2), both sets of gripping means jointly engage a stop bar (15) of the rolling pallet in a clamping manner without any play, and **in that** during the re-engaging operation, before a change of the rolling pallet, a single set of gripping means is moveable onto the other side of the storage position to the oppositely situated stop bar (15) and can be brought into a play-free clamping engagement with this stop bar, one cam-type gripping means drawing the rolling pallet in the Z direction and a second cam-type gripping means holding it in opposition thereto on the side of the stop bar situated opposite in the Z direction.

3. Extractor according to claim 2, **characterised in that** the extractor (11) can form a form-locking connection with the stop bars (15) on the rolling pallet (3) and with the cam-type gripping means (13, 14) on the trolley (1) or elevating means (2) by means of the structural profiling upwards between cam-type gripping means (13, 14) and stop bar (15) by means of a conical development of the stop bars (15) and the cam-type gripping means (13, 14).

4. Extractor according to claim 2 or 3, **characterised in that** the extractor (11), driven circulating endlessly via roller chains, is guided in the extracting and clamping region of the rolling pallet (3) in such a manner that the stalling torque, generated from extracting force and clamping force of the cam-type gripping means (13, 14), is absorbed via the linear guiding means (17, 18).

5. Rolling pallet with coupling devices (12) and stop bars (15) for the accomplishing of a method according to claim 1 by means of a device according to claim 2, **characterised in that** the rolling pallet (3) is configured on its underside with stop bars (15), which can form a form-locking connection with two or more of the driven cam-type gripping means (13, 14) of the extraction device (11), and **in that** the coupling device (12) for the rolling pallet (3) is produced from a plurality of individual plates (16), which are screw-connected and separated in the Z direction and are made from various materials with various degrees of hardness.

6. Rolling pallet according to claim 5, **characterised in that** the plates (16) of the coupling device (12) are disposed in such a manner in the Z direction that the coupling devices (12), on a vertical run on the elevating device (2), which is disposed in the compact store so as to be displaceable in the Y direction, can be traversed directly from below and from above in a coupled manner, and on a horizontal run, internally of the horizontally orientated track planes (4) in the compact store in the X direction on the trolley (1), can be traversed directly in a coupled manner from both sides in the X direction.

7. Rolling pallet according to claim 6, **characterised in that** the coupling device (12) is disposed on the central line of the rolling pallet (3) in the Z direction.

8. Rolling pallet according to claim 6, **characterised in that** the coupling device (12) comprises two coupling elements, which are disposed in a symmetrical manner at the same spacing from the central line of the rolling pallet (3) in the Z direction.

9. Rolling pallet according to one or more of claims 6 to 8, **characterised in that** two or more pairs of rollers are disposed per wheel axle.

## Revendications

1. Procédé pour extraire et accoupler des palettes à roulettes (3) qui sont utilisées dans la technique de stockage très dense, au moyen d'un dispositif d'extraction (11) pour un chariot coulissant (1) ou un élévateur (2) ainsi qu'au moyen de palettes à roulettes (3) qui présentent des dispositifs d'accouplement, avec un dispositif d'extraction présentant des chaînes à rouleaux circulaires sur lesquelles sont fixés des preneurs à taquets, ces preneurs à taquets pouvant être mis en position de serrage sans jeu ou de manière ajustée par l'intermédiaire de barres de butée (15) montées sur deux côtés de la palette à roulettes (3), de manière à tirer ou transporter la palette à roulettes sur un chariot coulissant ou un élévateur, lequel transporte plus loin la palette à roulettes,
**caractérisé en ce que** les directions de déplacement lors de l'extraction et de l'accouplement des palettes à roulettes (3) sont définies dans un système de coordonnées à 3 dimensions d'axes X, Y et Z, l'accouplement sur les chariots coulissants étant réalisé par une combinaison de déplacement sur l'axe Z et l'axe X et l'accouplement sur les élévateurs étant réalisé par une combinaison de déplacement sur l'axe Z et l'axe Y, et le dispositif d'extraction (11) tirant la palette à roulettes (3) dans la direction Z au niveau des barres de butée (15) par l'intermédiaire d'un ou plusieurs preneurs à taquets entraînés, tandis que un ou plusieurs preneurs à taquets (13,14) entraînés la retiennent sur le côté opposé dans la direction Z et maintiennent ainsi la palette à roulettes (3) absolument sans jeu dans la direction X au moyen d'une force de serrage définie produite par un dispositif de commande et de régulation de couple,
**en ce que** le dispositif d'extraction est constitué par quatre chaînes à rouleaux (19) sur chacune desquelles est disposé un preneur à taquets correspondant (13,14), entraînées individuellement les unes des autres,
**en ce que** deux chaînes à rouleaux (19) forment à chaque fois, avec des preneurs à taquets (13,14) pouvant se déplacer en sens inverse, un ensemble de saisie ou de prise,
et **en ce que** pendant la position de la palette à roulettes (3) sur le chariot coulissant (1) ou l'élévateur (2), seulement un ensemble de saisie est commandé, de sorte qu'un seul ensemble de saisie est mis en accouplement sans jeu avec la barre de butée de la palette à roulettes (3) opposée sur le côté opposé de la position de repos ou de stockage, par un changement immédiat de la palette à roulettes.

2. Procédé pour extraire et accoupler des palettes à roulettes (3) présentant des dispositifs d'accouplement (12) et des barres de butée (15), selon la revendication 1, dans lequel le dispositif d'extraction présente des chaînes à rouleaux circulaires (19) sur les quelles sont fixés des preneurs à taquets (13,14) et pouvant être entraînées individuellement et dans lequel ces preneurs à taquets peuvent être mis dans une position de serrage sans jeu sur une barre de butée (15) montée sur la palette à roulettes (3), afin de transporter la palette à roulettes sur un chariot coulissant (1) ou un élévateur (2), lequel transporte plus loin la palette à roulettes,
**caractérisé en ce que** le dispositif d'extraction (11) présente quatre chaînes à rouleaux circulaires et continues et pouvant être entraînées individuellement par des servomoteurs, un preneur à taquets étant disposé sur chaque chaîne à rouleaux,
**en ce que** les preneurs à taquets peuvent former une liaison à engagement positif,
**en ce que** deux chaînes à rouleaux (19) juxtaposées forment à chaque fois un ensemble de saisie avec leurs preneurs à taquets (13,14) pouvant se déplacer en sens inverse,
**en ce que** les ensembles de saisie sont réalisés de sorte qu'ils peuvent être commandés ensemble et/ou indépendamment les uns des autres de sorte que lors du procédé d'extraction de la palette à roulettes (3) sur le chariot coulissant (1) ou l'élévateur (2) les deux ensembles de saisie s'accouplent ensemble avec une barre de butée (15) de la palette à rouleaux de manière serrée et sans jeu et de sorte que lors du procédé d'enveloppement avant un changement de palette à roulettes, sur l'autre côté de la position de repos ou de stockage, un seul ensemble de saisie est déplaçable sur le côté opposé de la position de repos ou de stockage, un seul ensemble de saisie est déplaçable sur le côté opposé de la barre de butée (15) et qu'avec celui-ci il est possible d'amener un dispositif de serrage, un preneur à taquets tirant ou transportant la palette à roulettes dans la direction Z et un deuxième preneur à taquets la retenant sur le côté opposé, dans la direction Z de la barre de butée.

3. Dispositif d'extraction selon la revendication 2,
**caractérisé en ce que** le dispositif d'extraction (11), avec les barres de butées (15) sur la palette à roulettes (3) ainsi que les preneurs à taquets (13,14) sur le chariot coulissant (1) ou l'élévateur (2), peut former, par la forme de construction donnée, une liaison positive vers le haut entre les preneurs à taquets (13,14) et la barre de butée (15) par une réalisation conique des barres de butée (15) et des preneurs à taquets (13,14).

4. Dispositif d'extraction selon la revendication 2 ou 3,
**caractérisé en ce que** le dispositif d'extraction (11) est, en étant entraîné par des chaînes à rouleaux circulant sans fin, guidé dans la région d'extraction et de serrage de la palette à roulettes (3) de telle sorte que le couple de basculement, résultant de la force d'extraction et de la force de serrage des preneurs à taquets (13,14), est absorbé par les guides linéaires (17,18).

5. Palette à roulettes présentant des dispositifs d'accouplement (12) et des barres de butée (15) pour réaliser un procédé selon la revendication 1 par un dispositif selon la revendication 2,
**caractérisée en ce que** la palette à roulettes (3) présente, sur sa partie inférieure, des barres de butée (15) qui peuvent former une liaison positive avec deux ou plusieurs des preneurs à taquets (13,14) entraînés du dispositif d'extraction et
**en ce que** le dispositif d'accouplement (12) est constitué par de plusieurs plaques (16) individuelles, en différents matériaux de duretés différentes, vissées dans la direction Z.

6. Palette à roulettes selon la revendication 5,
**caractérisée en ce que** les plaques (16) du dispositif d'accouplement (12) sont disposées dans la direction Z de telle sorte que les dispositifs d'accouplement (12) peuvent, lors du déplacement vertical sur l'élévateur (2) disposé à déplacement dans la direction Y dans l'entrepôt de stockage très dense, être accouplés directement par le bas et par le haut, et peuvent, lors du déplacement horizontal dans la direction X sur le chariot coulissant (1) à l'intérieur des plans de roulage (4) de l'entrepôt de stockage très dense qui sont disposés à l'horizontale, être accouplés directement des deux côtés dans la direction X.

7. Palette à roulettes selon la revendication 6,
**caractérisée en ce que** le dispositif d'accouplement (12) est disposé sur la ligne médiane de la palette à roulettes (3) dans la direction Z.

8. Palette à roulettes selon la revendication 6,
**caractérisée en ce que** le dispositif d'accouplement (12) est constitué de deux éléments d'accouplement qui sont disposés symétriquement à égale distance de la ligne médiane de la palette à roulettes (3) dans la direction Z.

9. Palette à roulettes selon une ou plusieurs des revendications 6 à 8,
**caractérisée en ce qu'**il est prévu deux ou plus de deux paires de rouleaux par essieu.
